# DEMANDE DE BREVET EUROPEEN

(11) **EP 3 816 512 A1**
(43) Date de publication de la demande: **05.05.2021**
(21) Numéro de dépôt: 20204844.3
(22) Date de dépôt: 30.10.2020
(51) Int. Cl.: F23C 6/04, F23G 5/16

(54) **MODULE DE PRODUCTION DE CHALEUR COMPRENANT UN SYSTEME DE FILTRATION HAUTE TEMPERATURE**

(30) Priorité: 30.10.2019 FR 1912216
(71) Demandeur: Mini Green Power, 83400 Hyères (FR)
(72) Inventeur: RIONDEL, Jean, 83400 HYERES (FR); BILLAUD, Joseph, 83130 LA GARDE (FR)
(74) Mandataire: Macquet, Christophe

(57) **Abrégé**

La présente invention a pour objet un module de production de chaleur (100) à partir d'un combustible solide (1). Le module de production de chaleur (100) comprend un système de combustion (110) comportant un réacteur thermique (111) délimitant un foyer de combustion (112) et un tube de post-combustion (113) délimitant une zone de post-combustion (114), au moins un système de filtration haute température, tel qu'un filtre cyclonique (120a) ou une chambre de tranquillisation, destiné à retenir des poussières et un système de valorisation (130). Le système de filtration haute température est interposé entre le tube de post-combustion (113) et le système de valorisation (130).

## Description

### Domaine de l'invention

La présente invention concerne un module de production de chaleur à partir d'un combustible solide comprenant un système de filtration haute température.

### Art Antérieur

Un module de production de chaleur à partir d'un combustible solide, notamment issu de la biomasse, comprend couramment une zone de combustion comportant un foyer équipé d'une grille, une zone de post-combustion, un échangeur de chaleur et une zone de traitement des fumées comportant un filtre multi-cyclonique et un dépoussiéreur. Le filtre multi-cyclonique est prévu pour retirer les plus grosses particules volantes dont des escarbilles incandescentes. Le dépoussiéreur comprend généralement un filtre à manche ou un filtre électrostatique pour capter des particules volantes de taille réduite.

Le foyer est par exemple un foyer à grilles automatiques, indifféremment disposées de manière sensiblement coplanaire ou en gradin. Le combustible solide est injecté par l'intermédiaire d'un piston, une vis sans fin ou un dispositif analogue sur les grilles. Les grilles automatiques comprennent une partie fixe et une partie mobile. La partie mobile fait avancer le combustible le long du foyer à partir d'un mouvement d'aller-retour.

Le foyer est par exemple un foyer équipé d'un convoyeur à chaîne. Le combustible solide est injecté par l'intermédiaire d'un piston, une vis sans fin ou un dispositif analogue sur le convoyeur à chaîne qui fait avancer le combustible le long du foyer.

Le foyer est par exemple équipé de grilles vibrantes qui convoient le combustible solide le long du foyer.

Quel que soit le type de foyer, le foyer est équipé de deux systèmes d'injection d'air distincts. Un air primaire est injecté sous la grille de combustion de façon à finaliser la combustion du carbone des résidus qui sont en contact de la grille et à refroidir la grille. Un air secondaire est dosé dans des proportions qui favorisent la formation d'un gaz de synthèse et qui permettent une combustion partielle du gaz de synthèse à la température optimale.

La zone de post-combustion débute après l'injection de l'air secondaire. Cette zone permet d'assurer un mélange optimal entre l'oxygène et le gaz de synthèse. Cette zone contribue aussi à assurer un temps de passage à haute température suffisamment important pour qu'une combustion parfaite du gaz de synthèse soit réalisée.

La zone d'échange de chaleur comporte par exemple un échangeur de chaleur qui permet de transférer une énergie thermique des fumées vers un fluide caloporteur, tel que de l'eau, de la vapeur d'eau, une huile, de l'air ou analogue. L'échangeur de chaleur est indifféremment un échangeur tubulaire ou à plaques, un échangeur gaz/gaz ou un échangeur gaz/liquide, voire un surchauffeur de vapeur. Accessoirement, les fumées peuvent aussi être utilisées directement dans un sécheur ou un four industriel.

La zone de traitement des fumées permet de dépoussiérer les fumées d'échappement et éventuellement de traiter certains polluants avant de libérer ces fumées dans l'atmosphère. Le dépoussiéreur comprend un premier étage de filtration utilisant une technologie cyclonique permettant une préfiltration des fumées afin d'évacuer des combustibles solides imbrûlés, tels que des escarbilles, et les plus grosses particules de fumées. Le dépoussiéreur comprend un deuxième étage de filtration qui permet d'assurer des réglementations en termes de rejet de poussière.

Un tel module de production de chaleur présente de nombreux inconvénients.

Un premier inconvénient réside dans le fait que, lors de la combustion du combustible solide, des poussières sont susceptibles d'être entraînées dans un flux de fumées et peuvent générer plusieurs problèmes.

Un premier problème réside en un dépôt de particules solides contenues dans les fumées qui peuvent encrasser des conduits de fumées ou endommager l'échangeur de chaleur. Le dépôt de particules solides sur l'échangeur de chaleur peut réduire de manière significative son rendement. Des opérations de maintenance doivent alors être entreprises afin de nettoyer l'échangeur de chaleur et/ou les conduits de fumées. Ces opérations de maintenance nécessitent l'arrêt du module de production de chaleur et génèrent des coûts liés à l'arrêt de la production de chaleur et aux opérations de maintenance.

Un deuxième problème réside en une présence d'escarbilles ou de poussières abrasives en sortie de la zone de combustion qui peuvent endommager les équipements du module de production présents en aval de la zone de combustion. Les escarbilles et/ou les poussières abrasives sont susceptibles d'endommager et/ou d'user prématurément l'échangeur de chaleur ou bien un sécheur qu'il convient ensuite de remplacer.

Un troisième problème existe par rapport à la présence des escarbilles en sortie de zone de combustion : ces poussières enflammées peuvent traverser l'échangeur et arriver jusqu'au système de filtration final sans être éteintes. Si le système de filtration est un filtre à manches, celui-ci peut être percé par les escarbilles enflammées.

Un deuxième inconvénient réside dans des pertes thermiques au niveau de parois délimitant le foyer.

Un troisième inconvénient réside dans un agencement de la zone de post-combustion. La zone de post-combustion présente couramment une géométrie parallélépipédique, notamment cubique, générant des zones mortes ne favorisant pas un mélange gazeux et induisant une inhomogénéité des températures, ce qui est défavorable à une bonne combustion de résidus organiques imbrûlés. De plus, un volume nécessaire pour la combustion des résidus organiques imbrûlés se rajoute à celui nécessaire pour le traitement des fumées en aval de l'échangeur de chaleur. La présence de ces deux volumes augmente un encombrement global du module de production de chaleur.

La présente invention vient améliorer la situation.

### Résumé de l'invention

Dans sa généralité, un module de production de chaleur de la présente invention est un module de production de chaleur à partir d'une combustion étagée d'un combustible solide.

Le module de production de chaleur comprend un système de combustion comportant un réacteur thermique délimitant un foyer de combustion et un tube de post-combustion délimitant une zone de post-combustion, un système de filtration haute température, tel qu'un filtre cyclonique ou une chambre de tranquillisation, qui est destiné à retenir des poussières, et un système de valorisation thermique.

Le réacteur thermique permet une conversion de combustibles solides en une énergie thermique et en gaz imbrulés, et le tube de post-combustion permet d'assurer un mélange optimal entre des gaz combustibles et un oxydant avant une admission de ces derniers à l'intérieur du système de filtration haute température.

Le système de filtration haute température permet de récupérer une grande partie des poussières en amont du système de valorisation pour en limiter l'abrasion et l'encrassement. Le système de filtration haute température est notamment équipé d'un système de refroidissement à l'air. Le système de filtration haute température permet aussi un maintien des gaz de combustion à une température suffisamment élevée, notamment supérieure à 850°C, et pendant un temps assez long, notamment de l'ordre de 2 secondes, pour permettre une dégradation d'un gaz de synthèse issu de la consomption du combustible solide, tel que le monoxyde de carbone. Le système de valorisation thermique comprend au moins un échangeur de chaleur.

Autrement dit, un module de la présente invention est un module de production de chaleur à partir d'un combustible solide. Le module de production de chaleur comprend un système de combustion comportant un réacteur thermique délimitant un foyer de combustion et un tube de post-combustion délimitant une zone de post-combustion. Le module de production de chaleur comprend avantageusement deux systèmes de filtration destinés à retenir des poussières. Le premier est un système de filtration haute température permettant de retirer les plus grosses particules volantes. Le second est avantageusement un dépoussiéreur pour capter des particules volantes de taille réduite et traiter les gaz acides. Le module de production de chaleur comprend un système de valorisation thermique. Le système de filtration haute température est interposé entre le tube de post-combustion et le système de valorisation thermique. Le deuxième système de filtration est placé en aval du système de valorisation thermique.

Le module de production de chaleur comprend avantageusement l'une quelconque au moins des caractéristiques suivantes prises seules ou en combinaison :
- la combustion du combustible solide est une combustion étagée,
- la combustion étagée comprend au moins une première combustion dans le réacteur thermique et une seconde combustion,
- la seconde combustion est dans le réacteur thermique ou dans le tube de post-combustion,
- la combustion étagée comprend une troisième combustion,
- la première combustion est en une zone inférieure du réacteur thermique, la seconde combustion est en une zone supérieure du réacteur thermique et la troisième combustion est à l'intérieur du tube de post-combustion,
- le système de filtration haute température est un filtre cyclonique haute température qui est équipé d'au moins une cheminée axiale interposée entre le filtre cyclonique haute température et le système de valorisation,
- le système de filtration haute température est une chambre de tranquillisation haute température qui est équipée d'une sortie radiale interposée entre la chambre de tranquillisation haute température et le système de valorisation,
- le système de filtration haute température comprend une enceinte logée à l'intérieur d'une enveloppe à double paroi entre lesquelles l'un quelconque au moins d'un air primaire, d'un air secondaire et/ou d'un air tertiaire circule préalablement à une admission de l'air primaire et/ou de l'air secondaire à l'intérieur du réacteur thermique, et/ou préalablement à une admission de l'air tertiaire à l'intérieur du tube de post-combustion,
- le système de traitement est avantageusement un dépoussiéreur comprenant, de préférence, un filtre à manche, un filtre électrostatique, ou un filtre à particules fines,
- le réacteur thermique est équipé d'un premier dispositif d'admission d'un air primaire en une zone inférieure du réacteur thermique et d'un deuxième dispositif d'admission d'un air secondaire en une zone supérieure du réacteur thermique,
- le tube de post-combustion est équipé d'un troisième dispositif d'admission d'un air tertiaire à l'intérieur du tube de post-combustion,
- le tube de post-combustion est interposé entre le réacteur thermique et le système de filtration haute température,
- le tube de post-combustion équipe une partie supérieure de l'enceinte,
- le système de filtration haute température est équipé d'un système de refroidissement,
- le système de valorisation comprend un organe de valorisation qui comporte au moins un échangeur de chaleur apte à échanger de la chaleur avec un fluide caloporteur circulant à l'intérieur d'un circuit de valorisation.

### Brève description des dessins

L'invention sera mieux comprise à la lecture de la description non limitative qui suit, rédigée au regard des dessins annexés, dans lesquels :
- la figure 1 représente une vue schématique d'une première variante de réalisation d'un module de production de chaleur de la présente invention comprenant un filtre cyclonique,
- la figure 2 représente une vue schématique d'une deuxième variante de réalisation d'un module de production de chaleur de la présente invention comprenant une chambre de tranquillisation,
- la figure 3 représente une vue schématique d'un réacteur thermique constitutif du module de production de chaleur illustré sur les figures 1 et 2,
- la figure 4 représente une vue schématique du filtre cyclonique haute température constitutif du module de production de chaleur illustré sur la figure 1,
- la figure 5 représente une vue schématique de la chambre de tranquillisation constitutive du module de production de chaleur illustré sur la figure 2,
- la figure 6 représente une vue schématique d'un système de valorisation suivi par un deuxième système de filtration constitutif du module de production de chaleur illustré sur les figures 1 et 2,
- la figure 7 représente une vue schématique d'une variante d'un réacteur thermique constitutif du module de production de chaleur illustré sur les figures 1 et 2,
- la figure 8 représente une vue schématique d'une variante de la chambre de tranquillisation constitutive du module de production de chaleur illustré sur la figure 2.

### Description détaillée de l'invention

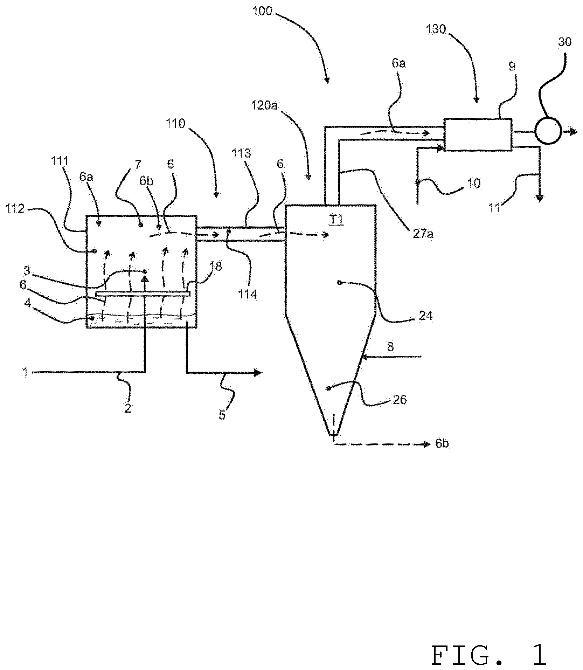

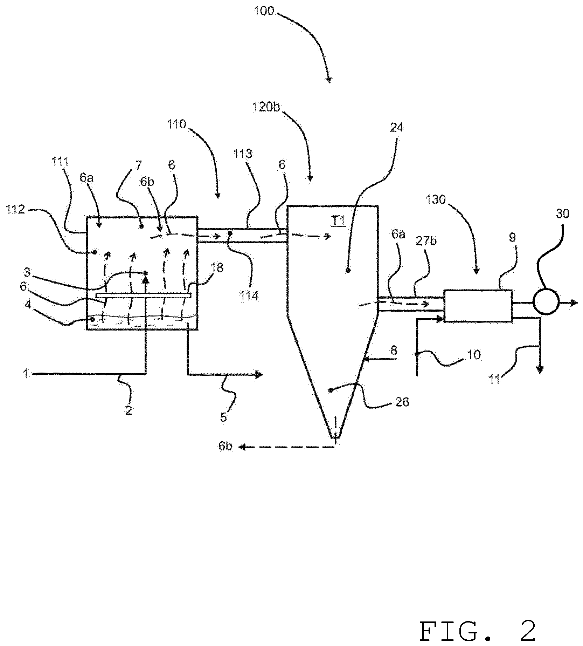

Sur les figures 1 et 2, un module de production de chaleur 100 est destiné à produire de la chaleur à partir d'un combustible solide 1, notamment issu de la biomasse. Le combustible solide 1 est susceptible de comporter un combustible solide de recyclage, un combustible solide de récupération, du coke ou tout mélange des composants énoncés. Le module de production de chaleur 100 comprend un système de combustion 110 comportant un réacteur thermique 111 délimitant un foyer de combustion 112 et un tube de post-combustion 113 délimitant une zone de post-combustion 114, un premier système de filtration, nommé système de filtration haute température 120a, 120b, qui est destiné à retenir les plus grosses particules de poussières, et qui est refroidi ou non, un système de valorisation 130 et un système de traitement 30. Le système de traitement 30 est un second système de filtration, avantageusement un dépoussiéreur, permettant de capter des particules de poussières de taille réduite. Le réacteur thermique 111 est un réacteur à l'intérieur duquel se produit une réaction de combustion préalable à une réaction de post-combustion qui se réalise à l'intérieur du tube de post-combustion 113. On note à ce stade de la description que le système de filtration haute température 120a, 120b est indifféremment constitué d'un filtre cyclonique haute température, tel qu'illustré sur la figure 1, ou bien d'une chambre de tranquillisation 120b, telle qu'illustrée sur la figure 2.

Le système de combustion 110 est équipé d'un dispositif de convoyage 2 qui est apte à alimenter en combustible solide 1 le système de combustion 110. Plus particulièrement, le dispositif de convoyage 2 est prévu pour alimenter en combustible solide 1 une zone centrale 3 du foyer de combustion 112. Selon une autre variante de réalisation non représentée, le dispositif de convoyage est susceptible d'alimenter en combustible solide une zone périphérique du foyer de combustion. On note également que l'alimentation en combustible solide du foyer de combustion est susceptible d'être réalisée par le dessus de ce foyer.

A l'intérieur du foyer de combustion 112, le combustible solide 1 est consumé ce qui produit des cendres 4. Les cendres 4 sont évacuées hors du réacteur thermique 111 par l'intermédiaire d'un système de décendrage 5. Le système de décendrage 5 comporte par exemple au moins une grille mobile de décendrage 18. Une proportion de cendres 4 est entrainée avec un flux gazeux à haute température 6 vers une zone supérieure du réacteur thermique 7. Le flux gazeux à haute température 6 est brûlé partiellement à l'intérieur de la zone supérieure du réacteur thermique 7 et poursuit sa combustion à l'intérieur du tube de post-combustion 113 qui est en communication aéraulique avec la zone supérieure du réacteur thermique 7.

Le flux gazeux à haute température 6 comprenant des fumées 6a et des poussières 6b pénètre ensuite à l'intérieur du système de filtration haute température 120a, 120b qui est en communication aéraulique avec le tube de post-combustion 113. Le système de filtration haute température 120a, 120b est couramment porté à une première température T1 qui est comprise entre 800°C et 1000°C. Une grande partie des poussières 6b présentes à l'intérieur du flux gazeux à haute température 6 est captée par le système de filtration haute température 120a, 120b et est évacuée par le bas du système de filtration haute température 120a, 120b. On estime qu'entre 60% et 70% des cendres contenues à l'intérieur du flux gazeux à haute température 6 sont captées.

Le système de filtration haute température 120a, 120b est équipé d'un système de refroidissement 8. Le système de refroidissement 8 est prévu pour récupérer des calories et protéger les matériaux sensibles à la chaleur du système de filtration haute température 120a, 120b. Les fumées chaudes et partiellement dépoussiérées du flux gazeux à haute température 6 pénètrent à l'intérieur d'un organe de valorisation 9 constitutif du système de valorisation 130. L'organe de valorisation 9 est indifféremment une chaudière, un four, un sécheur ou un organe de récupération de chaleur analogue. Les fumées chaudes et partiellement dépoussiérées du flux gazeux à haute température 6 transfèrent alors leur chaleur à l'organe de valorisation 9. Lorsque l'organe de valorisation 9 est une chaudière, la chaleur est transférée à un fluide caloporteur 10 qui circule à l'intérieur d'un circuit de valorisation 11. Le fluide caloporteur 10 est indifféremment de l'eau surchauffée, de la vapeur d'eau, de l'huile thermique ou un fluide caloporteur analogue. Les fumées 6a passent dans le second système de filtration 30, avantageusement un dépoussiéreur comprenant par exemple un filtre à manche, pour achever de les dépoussiérer et ensuite partir dans une cheminée avec une teneur de poussières très faible. Un ventilateur est avantageusement placé dans cette cheminée afin de renvoyer les fumées dépoussiérées du système de traitement 30 vers l'extérieur.

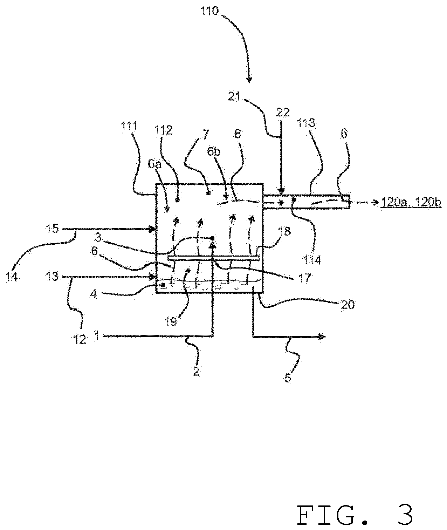

Sur la figure 3, le réacteur thermique 111 est équipé d'un premier dispositif d'admission 12 d'un air primaire 13 pour consumer le combustible solide 1. Le réacteur thermique 111 est aussi équipé d'un deuxième dispositif d'admission 14 d'un air secondaire 15 pour brûler dans la zone supérieure du réacteur thermique 7 des gaz de synthèse issus de la consomption du combustible solide 1. L'injection de combustible solide 1 est réalisée par le bas du réacteur thermique 111. D'autres types d'alimentation en combustion solide 1 sont possibles comme évoqué précédemment. Plus particulièrement, le réacteur thermique 111 est alimenté en combustible solide 1 par un centre 17 de la grille mobile de décendrage 18 logée à l'intérieur du foyer de combustion 112 pour assurer une répartition radialement homogène du combustible solide 1 à l'intérieur du foyer de combustion 112. L'air primaire 13 est injecté à l'intérieur d'une zone inférieure du réacteur thermique 19, située sous la grille mobile de décendrage 18, de façon à finaliser la combustion du carbone des résidus qui sont en contact de la grille et à refroidir la grille. L'air primaire 13 traverse ainsi un lit de combustible solide 1. L'air secondaire 15 est injecté dans la zone supérieure du réacteur thermique 7. Il en résulte que le flux gazeux à haute température 6 s'écoule vers et à l'intérieur du tube de post-combustion 113. Les cendres 4 sont quant à elles évacuées par une partie inférieure 20 du réacteur thermique 111.

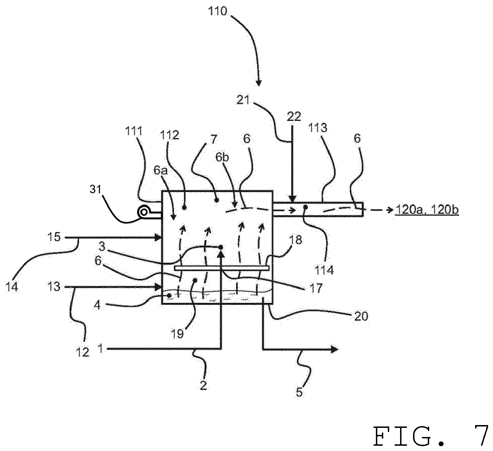

Le réacteur thermique peut également comporter un premier brûleur 31, également nommé ci-après brûleur de démarrage 31, afin de déclencher la combustion dans le système de combustion 110. Ce brûleur de démarrage 31, représenté schématiquement sur la figure 7, est optionnel et son utilisation n'est nécessaire que pour les combustibles à faible pouvoir calorifique.

Le tube de post-combustion 113 est équipé d'un troisième dispositif d'admission 21 d'un air tertiaire 22 pour permettre une combustion du flux gazeux à haute température 6. Le tube de post-combustion 113 permet d'assurer un mélange optimal du flux gazeux à haute température 6 et de l'air tertiaire 22 en amont du système de filtration haute température 120a, 120b. Le tube de post-combustion 113 constitue également un volume supplémentaire pour la post-combustion du flux gazeux à haute température 6 qui rallonge un temps de séjour du flux gazeux à haute température 6 à l'intérieur du réacteur thermique 111, et améliore la combustion du flux gazeux à haute température 6. Le tube de post-combustion 113 est susceptible de présenter une conformation quelconque à partir du moment où le tube de post-combustion 113 permet les fonctions de post-combustion, de mélange des gaz et de maintien à haute température des gaz.

De façon générale, la combustion étagée comprend au moins une première combustion et une deuxième combustion. A chaque étape de la combustion étagée, l'apport en dioxygène par rapport au combustible, est supérieur à celui d'une gazéification.

Selon un mode de réalisation préféré de l'invention, la première combustion est en une zone inférieure du réacteur thermique 19, la seconde combustion est en une zone supérieure du réacteur thermique 7 et la troisième combustion est à l'intérieur du tube de post-combustion 113.

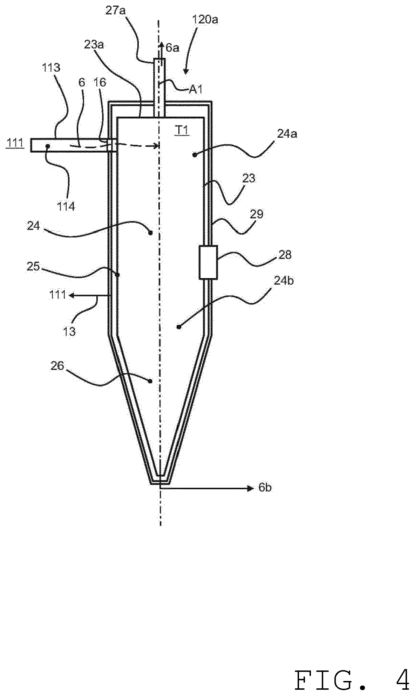

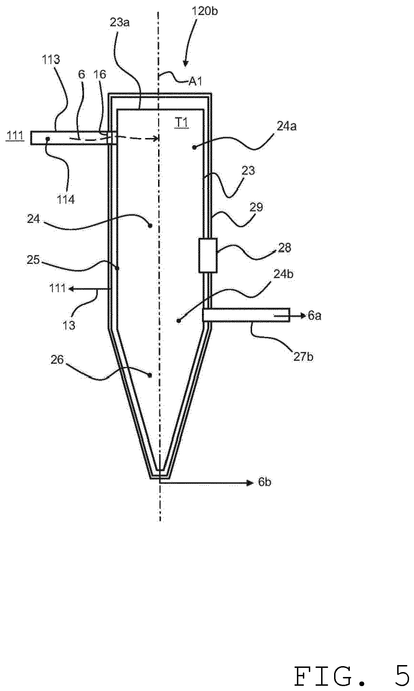

Sur les figures 4 et 5, est représenté le système de filtration haute température 120a, 120b permettant une récupération d'une grande partie des poussières 6b. Le système de filtration haute température 120a, 120b comprend une enceinte 23 cylindrique. L'axe de révolution de ce cylindre est noté A1 aux figures précitées 4 et 5. Le flux gazeux à haute température 6 entre tangentiellement à l'intérieur d'une partie supérieure de l'enceinte 24. La partie supérieure de l'enceinte 24 est couramment une partie cylindrique d'axe de révolution A1. Les poussières 6b, grâce à la force centrifuge, sont projetées sur des parois 25 de l'enceinte 23 et sont évacuées par une partie inférieure de l'enceinte 26. La partie inférieure de l'enceinte 26 est couramment une partie conique d'axe de révolution A1. Accessoirement, un échangeur thermique 28 équipe les parois 25 de l'enceinte 23 pour récupérer de la chaleur et refroidir les parois 25 de l'enceinte 23 qui fonctionne à haute température. Les parois 25 de l'enceinte 23 sont par exemple intérieurement recouvertes d'un matériau réfractaire. L'enceinte 23 est par exemple logée à l'intérieur d'une enveloppe à double paroi 29 entre lesquelles l'air primaire 13 circule préalablement à son admission à l'intérieur du réacteur thermique 111 afin d'améliorer un rendement du module de production de chaleur 100. Ainsi, avant d'être injecté, l'air primaire 13 se réchauffe en refroidissant avantageusement les parois 25 de l'enceinte 23 du système de filtration haute température 120a,120b.

On note que le système de filtration haute température 120a, 120b est susceptible d'être équipé d'un système pour diminuer les émissions en oxydes d'azote 16, procédant par injection d'un ou plusieurs réactifs, par exemple disposé en entrée du système de filtration haute température 120a, 120b pour retenir les oxydes d'azote.

Avantageusement, une quatrième zone de combustion est maintenue dans le système de filtration haute température 120a, 120b.

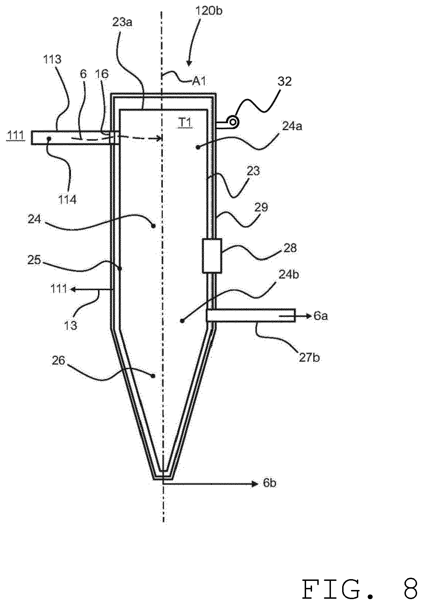

Le système de filtration haute température 120a, 120b peut également comporter, dans sa partie supérieure 24, un deuxième brûleur 32 optionnel permettant d'assurer une température minimale de combustion à charge réduite. Autrement dit, le deuxième brûleur 32, lorsqu'il est présent, permet de maintenir la combustion du flux gazeux à haute température 6 à l'entrée du système de filtration haute température 120a, 120b. Ce deuxième brûleur 32 est représenté schématiquement sur la figure 8.

Sur la figure 4, le système de filtration haute température 120a, 120b est constitué d'un filtre cyclonique haute température 120a. Dans ce cas-là, les fumées 6a sont évacuées par l'intermédiaire d'une cheminée axiale 27a disposée au centre du filtre cyclonique haute température 120a et est en communication aéraulique avec un volume supérieur 24a de la partie supérieure de l'enceinte 24. Plus particulièrement, la cheminée 27a équipe un couvercle 23a de l'enceinte 23. L'échangeur thermique 28 est susceptible d'équiper la cheminée axiale 27a.

Sur la figure 5, le système de filtration haute température 120a, 120b est constitué d'une chambre de tranquillisation 120b. Dans ce cas-là, les fumées 6a sont évacuées par l'intermédiaire d'une sortie radiale 27b qui est ménagée radialement à l'enceinte 23. La sortie radiale 27b est en communication aéraulique avec un volume inférieur 24b de la partie supérieure de l'enceinte 24. L'échangeur thermique 28 est susceptible d'équiper la sortie radiale 27b. On comprend que la sortie radiale 27b de la chambre de tranquillisation 120b est destinée à donner un volume supplémentaire pour la combustion du flux gazeux à haute température 6 et diminuer la quantité de poussières 6b à récupérer du fait notamment du ralentissement de l'écoulement des fumées 6a qui circulent selon un flux laminaire. On note aussi qu'une telle sortie radiale 27b est particulièrement avantageuse en cas d'encombrement au-dessus de la chambre de tranquillisation 120b.

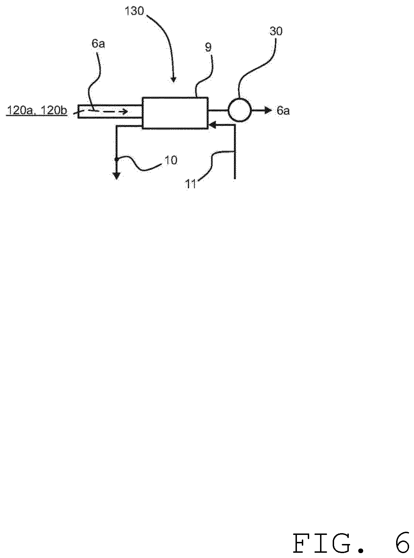

Sur la figure 6, le système de valorisation 130 permet un transfert de chaleur entre les fumées 6a partiellement épurées des poussières 6b et le circuit de valorisation 11 qui est par exemple constitutif d'un réseau de chauffage. Selon l'exemple illustré, l'organe de valorisation 9 prend par exemple la forme d'une chaudière gaz / liquide à deux passes et à contre-courant. Les fumées 6a sont ensuite susceptibles d'être utilisées dans des fours, des sécheurs industriels ou dans des serres. L'organe de valorisation 9 est indifféremment un échangeur à plaques, un échangeur tubulaire, un échangeur gaz / gaz, ou bien encore un échangeur gaz / liquide. L'organe de valorisation 9 est par exemple encore un échangeur constitutif d'une machine thermodynamique, d'un réseau de chaleur ou autre.

Les fumées 6a sont susceptibles d'être traitées par l'intermédiaire d'un système de traitement 30 des fumées, après récupération de chaleur. Ce système de traitement 30 est un second système de filtration. Il s'agit avantageusement un dépoussiéreur comprenant, par exemple, un filtre à manche, un filtre électrostatique ou analogue, ou un filtre à particules fines. Ce second système de filtration permet à la fois le dépoussiérage des fumées pour atteindre un taux de poussières faible et leur traitement en y injectant des réactifs tels que la chaux ou la soude.

Après passage dans le système de traitement 30, les fumées 6a peuvent être évacuées par la cheminée. Alternativement, après passage dans le système de traitement 30, une première partie des fumées 6a peut être évacuée par la cheminée, et une seconde partie de ces fumées 6a peut être recyclée dans le module de production de chaleur en les réinjectant dans l'air secondaire 15.

Ces dispositions présentent de nombreux avantages obtenus à partir d'une ou plusieurs caractéristiques de la présente invention, prises seules ou en combinaison.

On note qu'en positionnant le système de filtration haute température 120a, 120b entre le réacteur thermique 111 et le système de valorisation 130, on évite un encrassement du système de valorisation 130 par les poussières 6b qui ont été partiellement évacuées par le système de filtration haute température 120a, 120b.

On note aussi que le système de filtration haute température 120a, 120b évite une admission d'escarbilles à l'intérieur du système de valorisation 130 ce qui empêche une abrasion du système de valorisation 130.

On note aussi qu'un contrôle de la température en entrée du système de valorisation 130 à partir du système de filtration haute température 120a, 120b permet de préserver le système de valorisation 130 et de le pérenniser.

Le tube de post-combustion 113 favorise un mélange optimal de gaz combustible et d'oxydant pour la combustion totale des imbrûlés afin d'en éviter une émission dans l'atmosphère. En particulier, l'air tertiaire 22 permet de maintenir la combustion du flux gazeux à haute température 6 et ainsi limiter au maximum la concentration en monoxyde de carbone dans les fumées 6a.

Avec l'air tertiaire 22, le deuxième brûleur 32 permet de maintenir une température suffisamment élevée dans le système de filtration à haute température 120a, 120b, dans le cas où le pouvoir calorifique du gaz de synthèse est trop faible pour maintenir la température nécessaire à la combustion.

L'intégralité du processus de post-combustion est cylindrique et symétrique ce qui limite la formation de points morts défavorables à la combustion des imbrûlés.

Le passage dans le système de filtration haute température 120a, 120b permet au gaz d'avoir un temps de passage rallongé qui favorise la dégradation des gaz combustibles tels que le monoxyde de carbone.

La combustion étagée permet de réduire la concentration en oxyde d'azote dans les fumées 6a.

Le système de filtration haute température 120a, 120b réduit la concentration de particules dans les fumées 6a.

Le système de filtration haute température 120a, 120b est équipé du système de refroidissement 8 ce qui permet de récupérer des pertes thermiques aux parois 25 du système de filtration haute température 120a, 120b ce qui améliore le rendement du module de production de chaleur 100.

L'élimination des poussières 6b hors des fumées 6a avant le système de valorisation 130 permet de ralentir l'encrassement ce qui favorise les échanges thermiques à l'intérieur du système de valorisation 130 et améliore le rendement du module de production de chaleur 100.

Le volume et le temps de passage à haute température dans le système de filtration haute température 120a, 120b permet une combustion complète des imbrûlés ce qui maximise l'énergie thermique produite.

Le système de filtration haute température 120a, 120b est positionné entre le réacteur thermique 111 et le système de valorisation 130, ce volume est utilisé pour remplir les deux fonctions ce qui évite un encombrement préjudiciable.

Le système de convoyage 2 permet une alimentation en continue du combustible solide à l'intérieur du module de production de chaleur. La grille mobile de décendrage 18 permet une élimination en continue des cendres générées lors de la combustion du combustible solide. Ainsi, le système de convoyage 2 et la grille mobile de décendrage 18 permettent le fonctionnement en continu du module de production de chaleur, avantageusement sur toute l'année. Ainsi, il n'est pas nécessaire de vider régulièrement le réacteur thermique des cendres 4 générées lors de la combustion.

Le système de traitement 30 permet de s'assurer la récupération de toutes les poussières et permet de neutraliser les fumées, afin d'obtenir un taux de gaz acides faible.

Le positionnement du système de traitement 30 après le système de valorisation 130 permet d'éviter une perte de chaleur des fumées 6a avant leur passage dans le système de valorisation 130.

## Revendications

1. Module de production de chaleur (100) à partir d'un combustible solide (1), le module de production de chaleur (100) comprenant un système de combustion (110) comportant un réacteur thermique (111) délimitant un foyer de combustion (112) et un tube de post-combustion (113) délimitant une zone de post-combustion (114), au moins un système de filtration haute température (120a, 120b) destiné à retenir des poussières et un système de valorisation (130), dans lequel le système de filtration haute température (120a, 120b) est interposé entre le tube de post-combustion (113) et le système de valorisation (130).

2. Module de production de chaleur (100) selon la revendication 1, **caractérisé en ce que** la combustion du combustible solide (1) est une combustion étagée.

3. Module de production de chaleur (100) selon la revendication 2, **caractérisé en ce que** la combustion étagée comprend au moins une première combustion dans le réacteur thermique (111) et une seconde combustion.

4. Module de production de chaleur (100) selon la revendication 3, **caractérisé en ce que** la seconde combustion est dans le réacteur thermique (111) ou dans le tube de post-combustion (113).

5. Module de production de chaleur (100) selon l'une des revendications 3 ou 4, **caractérisé en ce que** la combustion étagée comprend une troisième combustion et **en ce que**, avantageusement, la première combustion est en une zone inférieure du réacteur thermique (19), la seconde combustion est en une zone supérieure du réacteur thermique (7) et la troisième combustion est à l'intérieur du tube de post-combustion (113).

6. Module de production de chaleur (100) selon l'une quelconque des revendications précédentes, dans lequel le système de filtration haute température (120a, 120b) est un filtre cyclonique haute température (120a) qui est équipé d'au moins une cheminée axiale (27a) interposée entre le filtre cyclonique haute température (120a) et le système de valorisation (130).

7. Module de production de chaleur (100) selon l'une des revendications 1 à 5, dans lequel le système de filtration haute température (120a, 120b) est une chambre de tranquillisation haute température (120b) qui est équipée d'une sortie radiale (27b) interposée entre la chambre de tranquillisation haute température (120b) et le système de valorisation (130).

8. Module de production de chaleur (100) selon l'une quelconque des revendications précédentes, dans lequel le système de filtration haute température (120a, 120b) comprend une enceinte (23) logée à l'intérieur d'une enveloppe à double paroi (29) entre lesquelles l'un quelconque au moins d'un air primaire (13), d'un air secondaire (15) et/ou d'un air tertiaire (22) circule préalablement à une admission de l'air primaire (13) et/ou de l'air secondaire (15) à l'intérieur du réacteur thermique (111), et/ou préalablement à une admission de l'air tertiaire (22) à l'intérieur du tube de post-combustion (113).

9. Module de production de chaleur (100) selon l'une quelconque des revendications précédentes, comprenant en outre un système de traitement (30) situé en aval du système de valorisation (130), ledit système de traitement (30), étant avantageusement un dépoussiéreur comprenant, de préférence, un filtre à manche, un filtre électrostatique, ou un filtre à particules fines.

10. Module de production de chaleur (100) selon l'une quelconque des revendications précédentes, dans lequel le réacteur thermique (111) est équipé d'un premier dispositif d'admission (12) d'un air primaire (13) en une zone inférieure du réacteur thermique (19) et d'un deuxième dispositif d'admission (14) d'un air secondaire (15) en une zone supérieure du réacteur thermique (7).

11. Module de production de chaleur (100) selon l'une quelconque des revendications précédentes, dans lequel le tube de post-combustion (113) est équipé d'un troisième dispositif d'admission (21) d'un air tertiaire (22) à l'intérieur du tube de post-combustion (113) .

12. Module de production de chaleur (100) selon l'une quelconque des revendications précédentes, dans lequel le tube de post-combustion (113) est interposé entre le réacteur thermique (111) et le système de filtration haute température (120a, 120b).

13. Module de production de chaleur (100) selon l'une quelconque des revendications 8 à 12, dans lequel le tube de post-combustion (113) équipe une partie supérieure (24) de l'enceinte (23).

14. Module de production de chaleur (100) selon l'une quelconque des revendications précédentes, dans lequel le système de filtration haute température (120a, 120b) est équipé d'un système de refroidissement (8).

15. Module de production de chaleur (100) selon l'une quelconque des revendications précédentes, dans lequel le système de valorisation (130) comprend un organe de valorisation (9) qui comporte au moins un échangeur de chaleur apte à échanger de la chaleur avec un fluide caloporteur (10) circulant à l'intérieur d'un circuit de valorisation (11).
